# EUROPEAN PATENT APPLICATION

(11) **EP 1 936 878 A1**
(43) Date of publication of application: **25.06.2008**
(21) Application number: 06026741.6
(22) Date of filing: 22.12.2006
(51) Int. Cl.: H04L 12/56, H04L 12/28

(54) **Method for channel assignment in multi-radio wireless mesh networks and corresponding network node**

(71) Applicant: IBBT vzw, 9050 Gent (BE); Universiteit Antwerpen, 2000 Antwerpen (BE)
(72) Inventor: Avonts, Jeroen Raf Odette, 2018 Antwerpen (BE)
(74) Representative: Plas, Axel Ivo Michel

(57) **Abstract**

A wireless mesh network connecting multiple wireless LAN networks (106, 107, 108) and a backbone (100). The mesh nodes (101,102,...) execute a method for channel assignment to use on a link (110) between an initiating node (101 and a participating node (102). The heating node (101) requests permission from participating node (102) for the channéldhànge. After permission is granted, the initiating node (101) and participating node (102) change to the new channel.

## Description

### Field of the Invention

The present invention generally relates to wireless networks and more particularly to the channel assignment in multi-radio wireless mesh networks. These wireless mesh networks typical provide full connectivity between multiple nodes. The multi-radio nature consists in the simultaneous use of multiple channels by a single node. Such channels can be particular frequencies, small frequency bands or small sets of frequencies used in radio communication, and can be unidirectional or bidirectional, full duplex or half duplex channels. Examples of channels are the bands defined in the IEEE 802.11 a/b/g standards. Such channels are used to form links between various nodes. A link should be considered the logical connection between two nodes. Existence of a link in the context of this patent application generally indicates that those nodes are communicating with each other. The current invention aims at decreasing interference and increasing overall throughput in the air medium.

### Background of the Invention

The air is contaminated by various electromagnetic waves. These waves have a particular frequency which may overlap with the frequencies used in wireless data communication. Such overlap is called interference and causes degradation in the quality of the communication on frequencies affected by the overlap.

Technologies such as the IEEE 802.11 WiFi standard specify multiple frequency bands, generally referred to as channels, which can be used for wireless communication. Nodes in a wireless network tune their wireless interface to a particular channel to transmit to and receive from that channel. The signals from a node on that channel travel through the air for a limited distance, and similarly the node can only receive signals from within that distance. This distance is called the communication range, and interference can be a problem within that range. For instance, three single interface nodes, A, B, and C all share the same channel and are within each other's communication range. Node A sends signals to node B and node B sends signals to node C, the latter will notice interference from the transmission from A to B. Thus, simultaneous transmissions by nodes within each other's range leads to additional interference next to that caused by external sources like for instance power lines or portable telephones.

Additionally, if several networks are close to each other, their communication range may overlap and these networks can interfere with each other. This could be solved by using orthogonal channels, which are non-overlapping channels. These orthogonal channels can be used to avoid inter-network interference but cannot avoid intra-network interference in a single-radio network such as those used in 802.11.

Further, nodes can contain multiple radio interfaces, allowing them to communicate on multiple channels simultaneously. This can lead to a reduction in intra-network interference, as nodes within each others communication range can use different frequencies for their communication. Consider the three nodes A, B and C, where communication between the nodes occurs on different, orthogonal channels. Nodes A and B communicate on a first channel, B and C on a second channel and A and C on a third. Transmissions from A to B may reach C but because C is not tuned to the first channel, this transmission does not interfere with the transmissions from C to A or B. Because the amount of orthogonal channels is limited, larger networks may need to reuse certain channels resulting in intra-network interference.

Using a distribution or assignment method for the available channels in a network is mandatory to reduce the amount of intra-network interference. A manual configuration of all the nodes is no option because it is time consuming and cannot be updated frequency enough to keep up with the changes in the traffic or the network. Descent channel distribution methods allow for a frequent updated situation where maximal spreading of the available channels is realised.

A first category of prior art solutions to distribute available wireless channels over the nodes is based on a central element which keeps an overview of the channel usage in the entire network and which decides on the channel allocation for each node in the network.

A centralized solution may work well in small networks where the workload on the central element is small as relatively few channel changes will have to be calculated and carried out. The main problem with a centralized solution is its scalability. A significant increase in the size of the network can extend the time needed to calculate a channel change quite a lot. The load on the central element and the longer delays for instructions propagating through the larger network can lead to a very slow environment where the interference problems are hardly dealt with. In addition, the central element constitutes a single point of failure.

A second category of prior art solutions for channel allocation concerns distributed systems where the nodes are responsible for channel selection and allocation on the basis of their limited view on the network. Such a distributed system is described for instance in a paper entitled "Architecture and Algorithms for an IEEE 802.11-Based Multi-Channel Wireless Mesh Network", authored by Ashish Raniwala and Tzi-cker Chiueh.

In this paper, the authors describe a distributed way for channel allocation in a multi-radio wireless mesh network. Each of the nodes in the solution described in this paper has two types of interfaces. One type, referred to as an UP-NIC, depends on a parent node. In other words, the node cannot change the channel for this type of interface autonomously since the configuration is determined by the parent node. The second type of interface, referred to as DOWN-NIC, can be configured by the node itself. The node can decide autonomously which channel is used on a DOWN-NIC interface. By distinguishing between two types of interfaces, this prior art solution creates a hierarchy amongst the nodes, resulting in a tree structure. The tree defines priorities amongst nodes which determine the allocation of bandwidth and the order in which channel selection can happen. As a result, the tree structure restricts the flexibility to assign channels. Some changes may be rejected based on the priority level of the concerned node in the tree. In this paper it is assumed that most of the traffic is directed to a wired backbone, and therefore the nodes closer to this backbone general receive more bandwidth by having a higher priority in the channel selection. As a consequence, high bandwidth links are unlikely to be located between two nodes away from the wired backbone which may be problematic, for instance when video traffic flows through the mesh from a source to a destination that are both connected to that mesh.

Another prior art solution belonging to the category of distributed channel allocation solutions is described in a paper titled "Distributed Channel Assignment in Multi-Radio 802.11 Mesh Networks" authored by Bong-Jun Ko, Vishal Misra, Jitendra Padhye and Dan Rubenstein.

This second publication references the first prior art document and explicitly points to the problem of the limited flexibility due to the hierarchical tree structure, e.g. on page 2 in section II. "Related work".

Ko, Mishra, Padhye and Rubenstein therefore propose a distributed channel allocation system that removes the parent/child structure and works independently from the routing. In their solution, any node can take the initiative for a channel change, requests permission for the proposed channel change from the nodes which have a link on the same channel. If all these nodes agree on the change, the initiator node changes his channel and sends a notification to the other nodes describing the new situation. The permission requests are sent over a dedicated channel for control communication. Alternatively, the nodes may be able to listen simultaneously on all channels for permission requests. Because it is not possible for a single interface to transmit on one channel but listen to all channels, the use of a control channel is probably preferred. The control channel also allows for communication between nodes during a channel change, when the initiating node has changed but the other nodes have yet to change to the new channel.

An additional control channel however, introduces new problems and limitations to the system. Firstly, the nodes need additional hardware for the additional channel that is used as control channel. A typical multi-radio node already needs at least two interfaces to be able to communicate on two different channels to other nodes. Introducing a control channel requires the node to support three interfaces at least, two for creating links to other mesh nodes and one for the control channel. Such third interface adds substantially to the hardware and software complexity of the nodes. Possibly the control channel itself introduces additional interference and/or restricts the availability of channels when selected out of the available channels. In the latter situation, the list of available channels is smaller as a result of which the channel allocation problem may become even harder to resolve.

Furthermore, a need for a priority for all of the nodes is described in the second prior art document to avoid deadlocks. This requires additional configuration to inform each node of their place on the priority list. When configured manually, the addition of new nodes to the mesh becomes more complex. It is not possible to put a new node on its location and connect power to the node, it will also require configuration. If an automatic configuration system is used, a particular element is required to keep track of all the nodes and their priority. This however results in a partially centralized solution where that particular element has a general overview of the priorities or the need for additional communication between all the nodes to determine the place of a new node in the existing tree.

It is an object of the present invention to provide a distributed channel allocation mechanism with increased flexibility over the prior art solutions. It is a further objective of the present invention to allow communication between nodes involved in a channel re-allocation without the use of additional channels, It is another objective of the present invention to provide a channel allocation system which avoids deadlocks. It is yet another objective of the present invention to reduce use of the air medium.

### Summary of the Invention

In the context of the present invention, it is important to realize what is referred to as a link. A link is not a physical connection such as a wire, but rather a virtual connection created by two nodes communicating on a particular channel. So if two nodes near each other have an interface on the same channel, but are not aware of each other and do not communicate with each other on this channel, they have no link. A particular link uses a single channel, but a single channel can be used by several links.

It should be noted that the present invention assumes an already established network layout and does not after this layout. Therefore the present invention cannot be used to determine which node should have a link to which other nodes, or determine how particular information is routed through the network.

According to the present invention, the above described objectives are realized and the shortcomings of the prior art are overcome through the use of a distributed method for channel assignment in a multi-radio, wireless mesh network as described in claim 1, comprising following steps:
- deciding to change a channel of a link by an initiating node terminating the link;
- requesting approval for changing the channel from a participating node terminating the link ;
- changing to a new channel for the link by the initiating node and the participating node,
wherein requesting approval from the participating node uses one or more existing channels on existing links providing a path to the participating node from the initiating node.

Each node in the network can evaluate its current channel allocation regularly, e.g. every hour, or at random time intervals. The evaluation examines the quality of the existing links and determines if an improvement can be made to the current channel allocation. If it is possible to make an improvement to the channel allocation, it will initiate a channel change procedure. The node initiating the channel change procedure is referred to as initiating node and the nodes to which the initiating node has a link on that channel are referred to as participating nodes. There can be one or more participating nodes for a given channel, which all have to be taken into account during the channel change procedure. The only constraint is that a given node cannot have more then one interface on a particular channel.

The initiating node requests approval from the participating nodes for the change in order to avoid conflicting channel changes. A node that is asked for permission ensures that it is able to change channel, e.g. it is not already part of another channel change procedure before accepting the channel change. Once all participating nodes have approved a channel change, the initiating node and the participating node terminating the link whereof the channel will be changed, switch to the new channel for that particular link. Every participating node is able to reject a channel change, therefore, no node can force a change upon another node, as was possible in the prior art. As a consequence, all nodes have equal rights in a channel change procedure which avoids flexibility restrictions due to priorities of nodes, or the formation of a tree structure amongst the nodes where particular interfaces depend on other nodes.

The channel change requires that the initiating node and the participating nodes are aware of the new channel for the link. The nodes can acquire this information in various ways. Firstly, the nodes can learn the new channel by communication between the two nodes. For instance, the initiating node may select the new channel and inform the participating node about this new channel. Alternatively, the initiating node could provide the participating nodes with a list of potential new channels from which the participating nodes select the new channel for the link. The participating nodes inform the initiating node of the selected new channel. In yet another alternative, the nodes can learn a new channel without any communication. The nodes could use a channel selection algorithm which selects the same channel at the initiating node and the participating nodes independently from each other. The algorithm can take into account information from a particular subset of nodes in the mesh network, where the subset is identical for the initiating node and the participating nodes.

A major difference to the prior art is the use of existing channels on existing links for approval of the proposed channel change. These links can either be the link whereon the channel is planned to change, or one or more alternate links that constitute a path to the participating nodes, possibly through intermediary nodes. The advantage is that these links and channels are already in use for data communication. Consequently, the need for a control channel is removed because the mesh network itself offers the necessary communication functionality. This in turn limits the amount of radio channels in the air medium improving overall performance.

An optional feature of the present invention is that deciding to change a channel is based on a metric value as described in claim 2.

All the nodes in the network have some way to initiate a channel evaluation, for instance a random timer which triggers an evaluation upon expiry. The evaluation generally assigns some metric value or quality value to each of the current links and the channel used on these links. The quality of a channel can be related to physical factors such as signal strength, transmission power, bandwidth or interference or logical factors such as the traffic load on a channel, number of retransmissions or the number of reserved paths. Another possibility for the metric is a combination of physical and logical factors.

The use of such metrics is preferable because they are the best indication of the quality of a link. However, the node could select a random channel to change or select the channel which has been in use for the longest period of time.

A further optional feature of the present invention is that requesting approval involves informing the participating node about the current channel and the new channel as described in claim 3.

As described before, it is important that both the initiating node and the participating node are aware of the channel that is going to change. When using communication between the nodes for this purpose, there are two options. The first option is to transmit messages between the nodes indicating the current channel and the new channel. These messages travel through the air medium in addition to the approval request messages. The second option is to include the channel change information in the approval request. The overall amount of messages transmitted between the various nodes can be reduced in this way, which in turn can improve the overall performance. In addition, limiting the amount of message types keeps the complexity of the hardware and software low.

Another optional feature of the present invention is that the initiating node and the participating node instruct, at least a subset of nodes within an interference range to reject channel change requests for a certain time period as described in claim 4.

Thus, a node involved in a channel change can lock its neighbourhood for channel changes during a limited time period, e.g. a few seconds or up to a few minutes, in order to avoid instability.

The initiating node and the participating nodes generally use information about the nodes and their configuration in their neighbourhood to decide on a channel change and to select a new channel. The neighbourhood will typically correspond to the interference range or a set of nodes within a particular distance of the node that are affected by the signals transmitted and received by the node.

The initiating node needs approval from all participating nodes, so if for instance a node is locked by another node due to a channel change, and becomes a participating node in another channel change procedure, it will reject the approval request from the initiating node for the latter channel change procedure. If a node is locked by another node, and receives a second lock instruction, it may reject the latter lock instruction, which in turn may lead to a cancellation of the second channel change procedure.

In general, an initiating node needs approval from all participating nodes for a channel change. In addition, if a locking mechanism is used, the initiating node and participating nodes should be able to lock all nodes in their range successfully. If both conditions are met, a channel change can occur. This way instability is avoided because nodes will always base a channel change on the most up to date information, if locking is ignored, a node can initiate a channel change during a channel change of another node. This may lead to conflicting changes, for instance if both nodes change to the same channel, either of the nodes will have to change again to improve the quality of its links.

A locked node can be unlocked in various ways. A first possible way is with an explicit unlock instruction from another node, for instance the node which issued the original lock instruction. A second possible way is by using a timer which automatically unlocks a node upon expiry. The second option has a few advantages, for instance, it can avoid deadlocks where all nodes are unable to change channel. If for some reason a node is locked and would remain locked (i.e. an unlock message is lost), all nodes within range of the locked node become unable to change channels. Thus, a timeout on the lock can solve this, by releasing the lock and allowing channel changes after a specific amount of time.

Variations to either of the unlocking strategies are possible, or even combinations. For instance, a lock can be timed, but an abortion of the channel change procedure may act as an unlock message. This provides a backup for a lost message and removes the need for an unlock message after a successful channel change.

A further optional feature of the present invention is that changing to the new channel may be time synchronized between the initiating node and the participating node as defined in claim 5.

This way, the channel re-allocation is performed with no or minimal interruption.

The link between the initiating node and the participating node is typically used for the transport of information. Channel changes should improve the quality of a link to offer better throughput and improve the overall quality of the network. Therefore long downtimes of a link should be avoided. Such downtime may increase the delay between transmission of information and the receipt of that information, or may lead to service interruption, which in turn can be a problem for particular information flows in the mesh network.

Time synchronisation aims at keeping the link up as long as possible using the existing, unchanged channel. It then attempts to coordinate the change between initiating node and participating node. A synchronized channel change will reduce downtime significantly, in particular if reconfiguration of the interfaces takes about an equal amount of time for all nodes. In that case, as soon as one node is ready to resume communication on the link using the new channel, all nodes should be ready.

When synchronisation is absent, the channel change can work as well. For instance, the initiating node can request permission and exchange information. As soon as permission is granted, the node can change to the new channel. However, it then has to wait for the participating node to change to the new channel and has to guess when this may have occurred. Thus, the initiating node can resume transmitting on the link using the new channel even though the participating nodes are not ready yet. This can lead to information loss and could increase the delays in the transmissions.

A further optional feature of the method according to the present invention is that the time synchronization may comprise a countdown triggered by at least one message transferred between the initiating node and the participating node, as defined in claim 6.

Thus, synchronization can be achieved by using a countdown mechanism which is triggered by either the initiating node or participating node. In this countdown, the node can inform the other nodes about when the change should happen. For instance, if all the nodes have a synchronized clock the message can contain an exact point in time of the channel change. Another possible manner for synchronisation option consists of several messages exchanged between the initiating node and the participating nodes. These messages are transmitted in intervals, e.g. a first messages is sent 500ms before the channel change, a second at 250ms, a third at 125ms, and so forth, which allows the nodes to synchronize their channel change. The amount of messages can vary. When the messages are sent over a bad link, it can be useful to send more messages as one can get lost. The intervals at which messages are sent can vary as well as long as they allow a channel change before the locking timer expires if such a timer is used.

In addition, the nodes can use the link for which the channel is about to change for countdown communication. That particular link is the shortest path between the nodes and introduces the least delay. However, if the channel is of low quality, another link which is part of a path between the two nodes can be used for countdown communication. An alternative link may introduce longer delays because the path is longer but can be more reliable due to higher quality of the intermediary links.

Another optional feature of the present invention is that the initiating node may contact the participating node or vice versa the participating node may contact the initiating node after changing to the new channel to verify if the link is maintained by a communication on the new channel, as defined in claim 7.

Verification can ensure that a channel change was successful. If for some reason one of the nodes is unable to use the hew channel, the link goes down, as a result of which the availability of paths and bandwidth in the mesh network is reduced. The nodes could be able to detect this and may take actions to correct such a situation.

Detection can be done by communicating over the link, using the new channel. If such communication is successful, i.e. all the nodes involved are able to transmit and receive on the new channel, operation in the mesh network can continue as before. If however a communication fails, the nodes can detect the failure and act accordingly. Alternatively, such communication can use a different link providing a path between the initiating node and the participating node. However, using an alternative path means a longer delay between a channel change and verification of a successful change.

A possible reaction to a failed channel change can be to revert the link to the old channel which is known to work unless there is a hardware failure. Another possible reaction is to consider the link as lost and keep the new channel. The latter reaction may be possible when there are multiple links whereon the same channel is used.

A further optional feature of the present invention is that the communication to verify a link may comprise successful transmission of at least one information packet on the new channel as defined by claim 8.

Once the channel change is completed, the nodes can resume the transmission of information packets constituting the traffic flow through the mesh network. A node can consider the channel change to be successful if it receives at least one information packet on the link using the new channel. A node can consider a link to fail if it does not receive any information packets within a specified timeframe after the channel change. Alternatively, nodes could be designed to explicitly respond to the first information packet they receive after a channel change to indicate successful receipt and thus a successful channel change.

Alternatively, the communication after a channel change in the present invention may comprise sending a message by the initiating node to the participating node on the new channel and sending a reply from the participating node to the initiating node on the new channel or vice versa, as defined by claim 9.

This way, either the initiating node or the participating nodes explicitly check for a successful channel change by polling the other nodes. This can for instance be done using a specific message which requires a response from the receiving node, similar to an Internet Control Message Protocol (ICMP) ping request and response. The nodes can use ICMP ping for this purpose, or any other protocol which supports this functionality. Alternatively, a new message type or an acknowledgement of an underlying layer such as the MAC layer can be used for this purpose.

A further optional feature of the method according to the present invention is that selecting said new channel may be based on a metric value as defined in claim 10.

A node that has decided to change a particular channel has to select a new channel. This could be a random channel which is currently not in use by the node. Alternatively, the initiation node could ask a new channel from the participating nodes. However, to achieve an improvement, it is essential to select a new channel based on a strong criterion or a combination of several criteria. For instance, the load on a channel, the interference, the number of paths on a channel can all be taken into account to select a channel. These criteria or metrics can be measured by each node and information may be exchanged between nodes. The nodes can calculate which change offers the most improvement based on the collected information.

A further optional feature of the present invention is that the metric value may comprise a load on the channel and a load on the new channel, as defined in claim 11.

The load on a channel is indicated by the amount of traffic that goes over the channel. Alternatively, the load can be seen as the amount of available bandwidth of a particular channel that is used for communication. The current channel could be under heavy load due to high usage of the links on that channel. Exchanging such a channel for another heavily loaded channel cannot improve the quality of the link significantly. Such changes should therefore be avoided which is possible by using the load on both the old and new channel when selecting a new channel. The load on a channel could be based on the entire load on that particular channel as seen by all nodes in the mesh network. Alternatively the load on a channel could be as seen by a particular node for a link of that node.

In addition, the node can take its own usage of the current channel and the new channel into account. If for instance a particular node creates all traffic on a channel, any change to a different channel is useless. The new channel would be equally loaded or possible more than the old channel.

Another optional feature of the present invention is that the metric value may comprise interference on the channel and interference on the new channel, as defined by claim 12.

Thus, a node may be able to detect the amount of interference on a given channel. For instance, it can detect signals on an interface which are not related to any of its own links. Using such a metric gives a better view on the physical state of the medium. An improvement based on this state can improve the links in the mesh network and thus increase the available bandwidth. A change based on the load on a channel will move the load to a different Channel and does not add more available bandwidth.

A further optional feature of the present invention is that selecting the new channel may be based on metric values indicative for use of the channel and the new channel by nodes up to three hops away from the initiating node or the participating node as defined by claim 13.

A node only has information about its own channel usage and influences from within a limited distance away from the node. It may be useful to collect information from several hops away. The hops that can be used are those which can cause interference with the nodes involved in the channel change. This provides the initiating node and participating nodes with the most relevant information for a channel change.

Typically, the interference range of a node is two hops away from a particular node, However, two hops away from the initiating node is three hops away from the participating node and vice versa. Therefore, a node can take into account all nodes two hops away from the node and those nodes three hops away from the node when communication goes over the link for which the channel may change. By using such subset of nodes, both initiating node and participating node can base their channel selection on the same information and can provide a change method which does not require much communication.

Alternatively, a node could use information from less nodes then those specified above. However, in such a case, load information or interference information may be less accurate. A node two hops away may use a particular channel extensively and cause a lot of interference to the initiating node, not taking that into account may lead to a channel selection which is not optimal. If the node takes a lot of nodes into account, part of the information used can be irrelevant for the change. Nodes that cause no interference should hot be taken into account, doing so would only complicate the algorithm which selects channels. Taking all the nodes of the mesh network into account removes the distributed aspect from the method. Although each node can perform the steps for a channel change, it does so on an overview of the complete network and overall channel usage, which in turn is not considered distributed as a single node performs all steps for that particular change.

The present invention further relates to a wireless multi-channel node for use in a wireless mesh network as defined, in claim 14, comprising:
- means for sending and receiving on a plurality of radio channels;
- means for communicating over a link with at least one other participating node via a channel out of the plurality of channel;
- means for deciding to change the channel;
- means for requesting approval for changing the channel from the participating node; and
- means for changing to the new channel;
characterized in that the means for communicating and the means for requesting approval are adapted to use one or more existing channels on existing links providing a path from the initiating node to the participating node for requesting approval from the participating node.

A wireless mesh network proves connectivity to all the devices connected to the mesh network. Generally a mesh network can also provide multiple paths between two particular nodes. The present invention relates to a node which is used to form a mesh network comprising several of these nodes. Their multi-channel nature allows them to communicate on multiple channels simultaneously. Thus, a node can have links to at least two other nodes on a different channel simultaneously.

The device is able to communicate with other nodes of the same kind or wireless nodes able to transmit and receive on the same channels. Such communication is used to transport information packets through the mesh network and to communicate about channel changes.

Additionally, the device is able to collect information from other nodes about channels that are currently in use. The device further comprises means able to calculate possible changes and their effect on the network based on that information. These means enable the device to initiate a channel change if an improvement is possible.

An important aspect of the multi channel node according to the inventuion is its ability to request approval of the participating nodes over existing links. The node can formulate a request for approval and transmit this request to all participating nodes. In order to do so, the node should be aware of the participating nodes and the protocol used for such requests. These protocols can either be existing protocols, for instance IP packets, or a propriety protocol designed for control communication within the wireless mesh network.

Further functionary of the node includes the ability to reconfigure its interfaces. Once a decision on a channel change is made, and the change is approved by the participating nodes, the node has to be able to reconfigure the related interface.

All control communication between various nodes should use existing links. Because the nodes are located in a mesh network, they have at least one path to every other node, possibly through intermediary nodes. These paths can be used to deliver control messages to other nodes. When using these links, no additional channel dedicated to control communication is required which leads to the above described advantages.

### Brief Description of the Drawings

Fig. 1 illustrates a wireless mesh network wherein an embodiment of the method according to the present invention is used for channel allocation;
Fig. 2a illustrates a message flow relating to the embodiment of the channel assignment method according to the present invention between an initiating node, a participating node and various neighbour nodes of the wireless mesh network drawn in Fig. 1;
Fig. 2b illustrates a state diagram of the initiating node in the embodiment of the channel change procedure according to the present invention illustrated in Fig. 2a;
Fig. 2c illustrates a state diagram of a participating node in the embodiment of the channel change procedure according to the present invention illustrated in Fig. 2a;
Fig. 2d illustrates a state diagram of a neighbouring node in the embodiment of the channel change procedure according to the present invention illustrated in Fig. 2a;
Fig. 3 illustrates a message flow in relation to a second embodiment of the channel assignment method according to the present invention wherein the approval request is rejected; and
Fig. 4 illustrates a message flow in relation to a third embodiment of the channel assignment method according to the present invention wherein the lock instruction is rejected.

### Detailed Description of Embodiment(s)

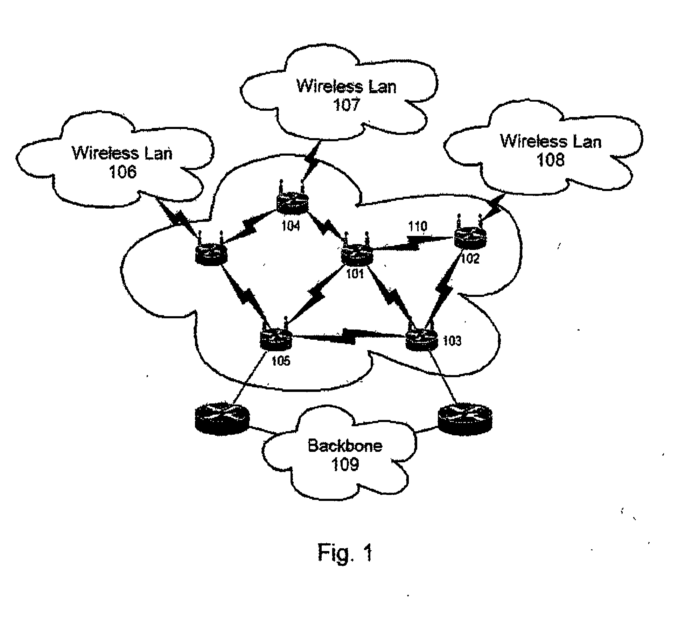

Fig. 1 shows a wireless mesh network with multi-channel nodes 101, 102, 103, 104 and 105. These nodes and the links there between constitute a full mesh network providing connectivity between all nodes, several wireless LAN networks 106, 107, 108 and a wired backbone 109. The goal of the wireless mesh network is to provide connectivity between the various wireless LAN networks and to the wired backbone.

The mesh itself provides redundancy, in order to maintain connectivity should a node fail and to provide multiple possible paths between any two points in the mesh network. The nodes have links to multiple other nodes using multiple channels. In the following figures, it is assumed that node 101 is the initiating node of a channel assignment process, node 102 is the participating node and nodes 103, 104 and 105 are neighbouring nodes. Initiating node 101 and participating node 102 will attempt to change the channel for link 110.

Both the initiating node and participating node are equivalent and therefore can be exchanged. The node referred to as initiating node triggers the channel change whereas the node referred to as participating node accepts or rejects a channel change request.

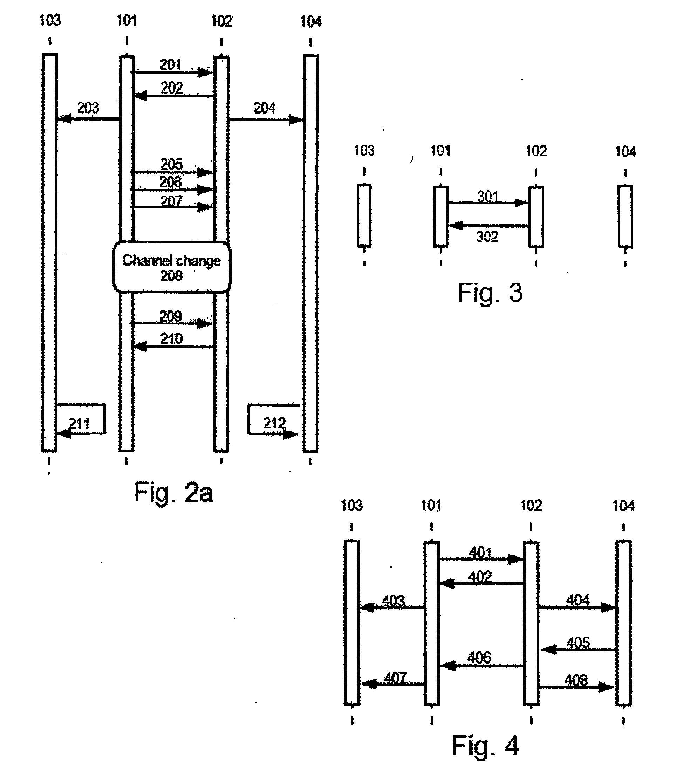

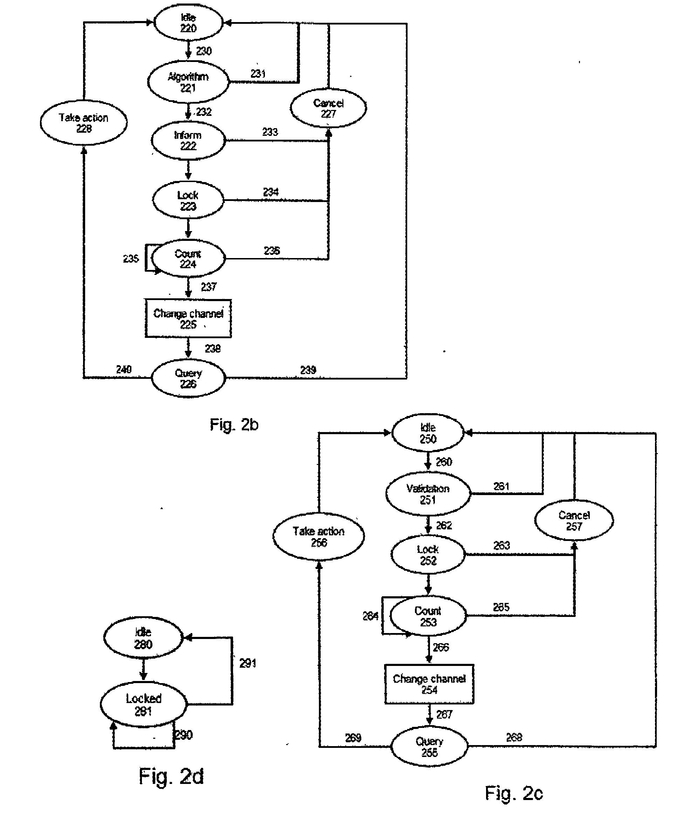

A first embodiment of the present invention is explained with reference to figures 2a, 2b, 2c and 2d. Fig. 2a shows a message flow during a successful channel change on the link 110 between nodes 101 and 102. The initiating node in Fig. 2a corresponds to node 101 in Fig. 1, the participating node in Fig. 2a corresponds to slave node 102 in Fig. 1 and the neighbour nodes correspond to nodes 103 and 104 in Fig. 1. Node 105 in Fig. 1 acts in a similar way as nodes 103 and 104.

Fig. 2b shows a general state diagram of the initiating node 101 and Fig. 2c shows a general state diagram of the participating node 102. Fig. 2d at last shows a state diagram of a neighbour node, e.g. node 103 or 104. A channel change involves various steps or states in both the initiating and the participating nodes and corresponding messages. Therefore each state and the related messages will be discussed with reference to drawings 2a, 2b, 2c and 2d.

Initially, all nodes are in an idle state, 220 for initiating node 101, 250 for participating node 102 and 280 for nodes 103, 104 and 105. In the idle state, all nodes perform their normal mesh network operation such as transporting information packets through the mesh network. This state is however idle in regard to channel change procedures.

The node 101 has an internal timer which is determined by a fix time interval of for instance 1 minute with a random offset of -5 to +5 seconds, resulting in a timer in the range from 55 seconds to 65 seconds. When the timer expires, the master node 101 moves to a new state, the algorithm state 221. All other nodes remain in their respective idle state as they are unaware of the state change by node 101.

In the algorithm state 221, node 101 evaluates its current channel assignments. It uses an algorithm to consider possible channel changes and to define which change has the largest impact and improvement in terms of interference reduction and/or capacity increase in the wireless mesh. If no improvement is possible, the master node 101 returns to the idle state 220 as indicated by reference 231.

If an improvement is possible, the node 101 transits to the inform state 222 as indicated by reference 232. In this state, the node 101 transmits an inform message 201 to node 102. This inform message 201 contains the information about the proposed channel change and serves as a permission request. This information has been obtained for instance from the algorithm which upon execution selects the channel that is best replaced and the most appropriate new channel to replace it by. The node 102 thereupon enters the validation state 251 as is indicated by reference 260. In the validation state 251, node 102 verifies if a channel change according to the inform message 201 is possible. The node 102 checks if it is already part of a channel change procedure, if it is locked by another node or if it would break other links when changing the channel and accepts the proposed change if none of these conditions hold true. Node 102 thereupon sends an acknowledgement message 202 to the node 101. Nodes 101 and 102 use the existing channel on link 110 between them to transmit these messages.

After accepting the change and transmitting acknowledgement message 202, node 102 enters the lock state 252, as indicated by reference 262. Similarly, node 101 transits to the lock state 223 once it has received acknowledgement message 202. in the lock states 223 and 252, node 101 and node 102 instruct their neighbour nodes 103,104 and 105 to go into their lock state 281 through lock message 203 and 204.

Once all nodes are in their lock state, node 101 and node 102 synchronize their channel change by a countdown procedure during the countdown states 224 and 253. Countdown, messages 205, 206 and 207 are transmitted from node 101 to node 102. Message 205 informs node 102 that a channel change will occur in 500 milliseconds (ms), message 206 is sent 250ms later and message 207 is sent 50ms before the channel change. These messages allow the node 102 to synchronize its countdown timer to the timer of node 101.

When both node 101 and node 102 have successfully counted to zero, they move to the next step as indicated by references 237 and 266. The nodes change their channel in step 225 for the node 101 and in step 254 for the node 102. The channel change is indicated in Fig. 2a as reference 208. After that point, both nodes 101 and 102 are able to communicate using the new channel on the wireless link. To ensure that communication is possible, the nodes 101 and 102 enter a final state, the respective query states 226 and 255 as indicated by references 238 and 267. In the query state 226, node 101 sends a message 209 to the node 102. Upon receipt thereof, node 102 transmits an acknowledgement message 210 to the node 101 and returns to the idle state 250. as indicated by reference 268. Node 101 returns to its idle state 220 as soon as the acknowledgement message 210 is received, as indicated by reference 239. Nodes 101 and 102 use the new channel for link 110 to query each other. Thus, the nodes 101 and 102 verify that link 110 is maintained and that the channel change is successful

At fast, the lock timer expires for the neighbour nodes 103 and 104 (and also for 105) as indicated by references 211 and 212. When the timer expires, the neighbour nodes 103, 104 and 105 return to their idle state 280, as indicated by reference 291.

The above description illustrates a successful channel change according to a first embodiment of the invention. However, there are various reasons why a channel change may not be possible, or be aborted during the change. Fig. 3 illustrates a case where the node 102 does not approve the channel change request 301 issued by node 101, similarly to permission request 201 over an existing link over the respective channel between node 101 and node 102. Node 102 rejects the change by sending a nack message 302 to the node 101.

Fig. 2b and 2c also illustrate what happens if the change proposal 201 would have been rejected. Node 102 is in the validation state 251 when it decides to reject a channel change. Such a rejection can be based on the fact that node 102 is already involved in a channel change procedure, node 102 may be locked by another node at that time or node 102 might break other links when changing the channel. After sending the nack message 302, node 102 returns to idle state 250 as indicated by reference 261. Node 101 is in the inform state 222 when it receives the rejection message, i.e. the nack message 302, and returns to the idle state 220 as indicated by reference 233.

Fig. 4 illustrates an embodiment of the invention where the channel change procedure is not completed. In this example, node 101 follows the steps as described above and transmits an inform message 401 to request approval of node 102. Node 102 accepts the change and transmits an acknowledgement message 402 to node 101. In addition, node 101 and node 102 lock their neighbours 103,104 and 105 with a lock message 403 and 404. However, neighbour node 104 is already locked by another node. Therefore, neighbour node 104 cannot accept the lock message 404 and sends a nack message 405 to node 102. Node 102 in turn sends a cancel message 408 to neighbour 104 and a cancel message 406 to the node 101, which thereupon sends a cancel message 407 to neighbour node 103 and a cancel message to neighbour node 105. This way, all nodes are informed about the failure to lock node 104; and the entire channel change is cancelled.

In Fig. 2b, reference 234 indicates that the node 101 returns to the idle state 220 when locking the neighbour nodes fails as learned from cancel message 406. In Fig. 2c reference 263 indicates that node 102 returns to its idle state 250 when nack message 405 is received. Finally, a neighbour node such as node 103 which was not locked before lock message 403 arrived, returns to its idle state 280 as indicated by reference 291 in Fig. 2d.

In addition to the above described scenario's, the channel change procedure can be aborted during the countdown state. For instance, if a node does not receive any countdown messages or receives a delayed nack message for a lock, it may send a cancel message to abort the procedure. In such a case, the nodes return to their idle states as indicated by reference 236 in Fig 2b for node 101 and reference 265 in Fig. 2c for node 102. Any locked nodes are released by cancel message 407 and 408.

In case the query fails, for instance there is no reply from slave node 102 within 1 minute after query message 209 or after a few retries of query message 209 from master node 101, the master node goes into the take action state 228 as indicated by reference 240. Similarly, the slave node 102 goes into the take action state 256 as indicated by reference 269. In this state, the nodes can return to the old channel or continue operation as normal and consider the link lost.

It should be noted that time synchronization between the nodes is optional. A countdown mechanism is only an example of synchronization mechanisms. As an alternative, nodes may have a built-in clock which can synchronize with an atomic clock. This ensures that all nodes have the same time and as a result, synchronization is possible by agreeing on a time for the change. Another alternative is to send a message from the initiating node which triggers a channel change upon receipt. Such a message may be sent over the link for which the channel will change, or over intermediate nodes forming a path from the initiating node to the participating node.

Additionally, it should be noted that the verification of the new channel for a link is optional. Nodes could assume a successful channel change and continue their normal operation without verification. However, verification provides more reliability in the mesh network. Sending a message and waiting for a response is a possible verification method. An alternative is that the nodes continue their normal operation and expect to receive traffic within a particular timeframe. If traffic is received, the channel change was successful, if no traffic is received, the nodes can take action to correct the situation.

Another remark is that locking is not required for the channel allocation method according to the present invention. Various criteria can be used to select the neighbour nodes to lock. For instance, all nodes within communication range may be locked, all the nodes within interference range may be locked, or a fixed amount of hops away from the initiating and participating nodes. For instance, a node can select all nodes two hops away from that node before changing a channel.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore, intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms, "first", "second", third", "a", "b", "c', and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A distributed method for channel assignment in a multi-radio wireless mesh network comprising following steps:
- deciding to change a channel of a link (110) by an initiating node (101) terminating said link (110);
- requesting approval for changing said channel from a participating node (102) terminating said link (110);
- changing to a new channel for said link (110) by said initiating node (101) and said participating node (102);
**characterized in that** requesting approval (201) from said participating node (102) uses one or more existing channels on existing links (110) providing a path to said participating node (102) from said initiating node (101).

2. A distributed method for channel assignment according to claim 1,
**characterized in that** deciding to change a channel is based on a metric value.

3. A method for channel assignment according to claim 1,
**characterized in that** requesting approval (201) involves informing said participating node (102) about said channel and said new channel.

4. A method for channel assignment according to claim 1,
**characterized in that** said initiating node (101) and said participating node (102) instruct (203, 204) at least a subset of nodes (103, 104, 105) within an interference range to reject channel change requests for a certain time period.

5. A method for channel assignment according to claim 1,
**characterized in that** changing to said new channel is time synchronized between said initiating node (101) and said participating node (102).

6. A method for channel assignment according to claim 5,
**characterized in that** time synchronization comprises a countdown triggered by at least one message (205, 206,207) transferred between said initiating node (101) and said participating node (102).

7. A method for channel assignment according to claim 1,
**characterized in that** said initiating node (101) contacts said participating node (102) or vice versa said participating node (102) contacts said initiating node (101) after changing (208) to said new channel to verify if said link (110) is maintained by a communication (209, 210) on said new channel.

8. A method for channel assignment according to claim 7,
**characterized in that** said communication comprises successful transmission of at least one information packet (209, 210) on said new channel.

9. A method for channel assignment according to claim 7,
**characterized in that** said communication comprises sending a message (209) by said initiating node (101) to said participating node (102) on said new channel and sending a reply from said participating node (102) to said initiating node (101) or vice versa on said new channel.

10. A method for channel assignment according to claim 1,
**characterized in that** selecting said new channel is based on a metric value.

11. A method for channel assignment according to claim 10,
**characterized in that** said metric value comprises a load on said channel and a load on said new channel.

12. A method for channel assignment according to claim 10,
**characterized in that** said metric value comprises interference on said channel and interference on said new channel.

13. A method for channel assignment according to claim 10,
**characterized in that** selecting said new channel is based on metric values indicative for use of said channel and said new channel by nodes up to three hops away from said initiating node (101) or said participating node (102).

14. A wireless multi-channel node (101) for use in a wireless mesh network comprising:
- means for sending and receiving on a plurality of radio channels;
- means for communicating over a link (110) with at least one other participating node (102) via a channel out of said plurality of channels;
- means for deciding to change said channel;
- means for requesting approval for changing said channel from said participating node (102); and
- means for changing to said new channel;
**characterized in that** said means for communicating and said means for requesting approval are adapted to use one or more existing channels on existing links providing a path from said initiating node (101) to said participating node (102) for requesting approval from said participating node (102).
